# EUROPÄISCHE PATENTSCHRIFT

(11) **EP 2 166 313 B1**
(45) Veröffentlichungstag und Bekanntmachung des Hinweises auf die Patenterteilung: **09.11.2011**
(21) Anmeldenummer: 08105378.7
(22) Anmeldetag: 18.09.2008
(51) Int. Cl.: G01D 5/244, G01D 5/14

(54) **Magnetischer Sensor**
Magnetic sensor
Capteur magnétique

(43) Veröffentlichungstag der Anmeldung: 24.03.2010
(73) Patentinhaber: SICK AG, 79183 Waldkirch (DE)
(72) Erfinder: Baak, Josef, 79183, Waldkirch (DE)
(74) Vertreter: Ludewigt, Christoph

(56) Entgegenhaltungen:
- EP-A- 1 498 697
- US-A1- 2005 285 581

## Beschreibung

Die Erfindung betrifft einen magnetischen Sensor nach dem Oberbegriff des Anspruchs 1 sowie ein Verfahren zur Bestimmung von Positionen eines Gebermagneten nach dem Oberbegriff des Anspruchs 10.

Aus der DE 37 42 524 A1 ist ein gattungsgemäßer Sensor und ein gattungsgemäßes Verfahren bekannt. Der dort offenbarte Sensor zur Bestimmung einer Position eines Gebermagneten entlang einer Strecke weist eine Vielzahl von feldlinienempfindlichen Sensorelementen auf, von denen jeweils 32 mit einer Steuerelektronik zu einem Modul zusammengefasst sind. Die Steuerelektronik eines Moduls umfasst eine elektronische Adress-Schaltung sowie acht AnalogMultiplexer, über die eines von jeweils vier Sensorelemente an eine analoge Leitung anschließbar ist, so dass das Sensorsignal des adressierten Sensorelements an eine Auswerteelektronik zur Bestimmung der Position übermittelbar ist.

Nachteilig daran ist, dass einerseits die Adress-Schaltung und die acht AnalogMultiplexer kostenaufwändig sind und insbesondere einen sehr großen Bauraum benötigen und deshalb als kompaktes Wegmesssystem in beispielsweise pneumatischen Zylindern zur Kolbendetektion nicht einsetzbar sind und dort nicht eingesetzt werden. Die Erfindung zielt jedoch auf äußerst kompakte Sensoren zur Kolbenpositionsbestimmung, wie sie an pneumatischen Zylindern von automatisiert arbeitenden Maschinen zur Erkennung der Position des Zylinderkolbens eingesetzt werden. In solchen Anwendungen ist der Bauraum sehr wichtig, denn die Sensoren sind für die eigentliche mechanische Funktion der Maschine störend, aber zur Positionsbestimmung unerläßlich. Deshalb sind derartige Sensoren möglichst klein und heutzutage einige Zentimeter lang mit einer Breite von wenigen Millimetern. Die Sensoren müssen auch deshalb einen kleinen Bauraum aufweisen, weil sie in standardisierte Nuten der Zylinderhersteller eingesetzt werden müssen.

Deshalb werden heutzutage für diesen Einsatzzweck magnetische Sensoren eingesetzt, die eine feste Länge haben mit einer festen Anzahl von Sensorelementen. Dabei ist die Anzahl von Sensorelementen begrenzt, da die Spannungsversorgung der Sensorelemente problematisch ist, denn entweder müssen die Sensorelemente mittels Transistoren geschaltet werden, wobei diese Transistoren dann wieder Bauraum benötigen oder die Sensorelemente müssen permanent mit Spannung versorgt sein, was bei der Vielzahl der Sensorelemente aber einen unzulässig hohen Stromverbrauch und damit eine unzulässige Eigenerwärmung bedeutet. Es sind auch magnetische Sensoren bekannt, bei denen die Sensorelemente über einen Analog-Digital-Wandler an einen Mikrocontroller angeschlossen sind. Der große Nachteil hier ist, dass die Anzahl der an einen Mikrocontroller anschließbaren Sensorelemente aufgrund der kleinen Anzahl von Mikrocontrollereingängen stark begrenzt ist. Ein weiteres Problem ist, dass aufgrund der kompakten Bauform in der Regel mehrere Leiterplatten verwendet werden und durch den Anschluss der Sensorelemente an den Mikrocontroller der Verdrahtungsaufwand zwischen den Leiterplatten schon bei wenigen Sensorelementen zu groß ist. Auch die damit verbundene große Anzahl von Lötstellen bedeutet einen hohen Aufwand und größeren Bauraum. Auch die begrenzte Anzahl von Sensorelementen beschränkt den Messbereich nachteilig, in der Regel auf 40 bis 50mm.

Aus der EP 1 498 697 A1 ist ein Drehgeber bekannt, bei dem der Absolutwert eines Drehwinkels mit Hilfe von acht über den Umfang verteilten Hallelementen gemessen wird. Jedes Hallelement wird über eine "modulation unit" mehrphasig angesteuert um entsprechende x- und y-Komponenten des Hallsignales zu erhalten. Die Ausgangsignale aller Hallelemente liegen parallel an einer Schalteinheit ("switching unit") an, die entsprechend den Schaltstellungen das analoge Hallsignal jeweils eines gewünschten Hallelements an eine Auswertung weitergibt.

Aus der US 2005/0285581 A1 ist eine Interface Schaltung für ein Hall IC bekannt, mit der die Stromversorgung für den Hall IC geregelt und kontrolliert werden kann, unter anderem um die Erwärmung des Hall IC's zu reduzieren und weitere Funktionen, wie Kommunikationsmöglichkeiten, bereitzustellen.

Der Erfindung liegt die Aufgabe zugrunde, einen verbesserten magnetischen Sensor sowie ein verbessertes Verfahren zur Bestimmung von Positionen eines Gebermagneten bereitzustellen, um die vorgenannten Nachteile zu vermeiden.

Diese Aufgabe wird gelöst durch einen Sensor mit den Merkmalen des Anspruchs 1 und ein Verfahren mit den Merkmalen des Anspruchs 10.

Der erfindungsgemäße magnetische Sensor zur Bestimmung einer Position eines Gebermagneten entlang einer Strecke weist mehrere Hall-Sensoren auf, die an eine Steuerelektronik angeschlossen sind. Die Steuerelektronik ist dazu ausgebildet, einerseits die Ansteuerdaten für einen zu aktivierenden Hall-Sensor seriell zu empfangen und andererseits die Hall-Sensoren parallel und entsprechend der Ansteuerung direkt zu aktivieren, so dass auf einer analogen Hallsignal-Busleitung, an der sämtliche Hall-Sensoren direkt angeschlossen sind, das Hallsignal des adressierten Hall-Sensors oder der Hall-Sensoren von einer Auswerteelektronik abgegriffen und zur Auswertung der Hallsignale und zur Ermittlung der Position ausgewertet werden kann. Unter einer analogen Hallsignal-Busleitung wird eine Leitung verstanden, an der die Hall-Sensoren unmittelbar direkt busartig angeschlossen sind, so dass deren analogen Hallsignale auf der Leitung liegen.

Dadurch, dass die Steuerelektronik die Ansteuerdaten lediglich seriell empfängt und den adressierten Hall-Sensor oder die adressierten Hall-Sensoren nur aktivieren muss, kann die Steuerelektronik sehr einfach und damit kostengünstig und insbesondere platzsparend, beispielsweise als einfaches Schieberegister, das sehr kostengünstig ist, ausgebildet sein.

Da die Hall-Sensoren und die zugehörige Steuerelektronik zu einem Modul zusammengefasst sind, kann die Erweiterbarkeit des magnetischen Sensors durch einfache Kaskadierung der Module erfolgen. Die Module sind seriell miteinander verbunden, so dass die Ansteuerdaten von Modul zu Modul durchgereicht werden. Ein weiterer großer Vorteil ist die beliebige Erweiterbarkeit, die deshalb möglich ist, weil die Module mit ihren z.B. als Schieberegister ausgebildeten Steuerelektroniken kaskadierbar sind und die Ansteuerdaten nur seriell durchgereicht werden müssen. Zusätzliche Leitungen oder Lötanschlüsse, die über die Aktivierung der Hall-Sensoren und Anschluß an die analoge Hallsignal-Busleitung hinausgehen, sind nicht notwendig. Damit ist der Sensor an beliebige Wegstrecken einfach anpassbar.

Die Kosten für die Kontaktierung bei einer Kaskadierung bleiben gering, da nur entsprechend wenige Signalleitungen benötigt werden. Auch der Stromverbrauch ist sehr gering und unabhängig von der Länge der Messstrecke.

Somit kann eine theoretisch beliebig lange, frei skalierbare Messlänge in kleinster Bauform realisiert werden.

Weitere Ausführungsformen sind Gegenstand der abhängigen Ansprüche aus denen sich weitere Vorteile ergeben.

Bevorzugt weisen die Hall-Sensoren jeweils einen Sleep-Modus-Eingang auf, denn dann ist die Reaktionszeit der Hall-Sensoren sehr gering und ein alternativ möglicher zusätzlicher digitaler Schalter zur Aktivierung der Hall-Sensoren durch Ein- und Ausschaltung ihrer Spannungversorgung kann eingespart werden.

In einer Ausführungsform der Erfindung ist eine zweite analoge Hallsignal-Busleitung vorgesehen. Dies ist insbesondere dann von Vorteil, wenn die Hall-Sensoren immer abwechselnd an die erste und zweite Hallsignal-Busleitung angeschlossen sind und benachbarte Hall-Sensoren gleichzeitig aktivierbar sind, denn dann können die Hallsignale zweier benachbarter Hall-Sensoren gleichzeitig von der Auswerteelektronik empfangen werden und insgesamt kann damit dann die Position des Gebermagneten genauer bestimmt werden und zwar ohne Zeitverzögerung, da keine Totzeiten zwischen den benachbarten Hall-Sensoren berücksichtigt werden müssen. Auch kann ein Hin- und Her-Schalten zwischen benachbarten Hall-Sensoren, wenn beispielsweise der Gebermagnet sich in etwa in der Mitte zwischen zwei Hall-Sensoren befindet, vermieden werden.

In einer vorteilhaften Variante, die eine kompakte Bauform ermöglicht, ist das Modul oder sind die Module auf einer ersten Leiterplatte angeordnet und die Auswerteelektronik auf einer zweiten Leiterplatte, und die Leiterplatten sind mit einer Steckverbindung verbunden, wobei bevorzugt die Leiterplatten parallel übereinander angeordnet sind. Insbesondere in dieser Ausführungsform sind dann sehr schmale Bauformen möglich. Über die Steckverbindung sind die Leiterplatten zueinander mechanisch gehalten.

Wenn die Hall-Sensoren eine radiale Komponente des Magnetfelds des Gebermagneten erfassen, liegt ein Messbereich eines Hall-Sensors vor mit nahezu linearem Verlauf zwischen Hallsignal und Weg, womit die Positionsbestimmung deutlich vereinfacht wird.

Wie einleitend bereits ausgeführt, werden die erfindungsgemäßen magnetischen Sensoren zur Erfassung der Position eines einen vorzugsweise als Dauermagnet ausgebildeten Gebermagnet tragenden Kolbens eines Pneumatikzylinders eingesetzt. Dabei ist der erfindungsgemäße Sensor zur Halterung in einer Nut zumindest mit einem Teil seines Gehäuses in der Nut versenkbar und in dieser festlegbar. Standardmäßig sind derartige Befestigungsnuten an Pneumatikzylindern als T- oder C-Nuten ausgebildet.

Gegenstand der Erfindung ist auch ein Verfahren zur Bestimmung einer Position eines Gebermagneten entlang einer Strecke, bei dem der erfindungsgemäße Sensor eingesetzt wird. Dabei werden die Hall-Sensoren längs der Strecke angeordnet und ein Hallsignal eines bestimmten der Hall-Sensoren mittels der Steuerelektronik, die bevorzugt als Schieberegister ausgebildet ist, erhalten. Die Hallsignale werden zur Ermittlung der Position über die analoge Hallsignal-Busleitung an die Auswerteelektronik gegeben. Erfindungsgemäß empfängt die Steuerelektronik einerseits die Ansteuerdaten für einen zu aktivierenden Hall-Sensor seriell und andererseits aktiviert die Steuerelektronik die Hall-Sensoren parallel. Das Hallsignal oder die Hallsignale werden unmittelbar auf die analoge Hallsignal-Busleitung gegeben.

Bevorzugt werden jeweils benachbarte Hall-Sensoren gleichzeitig aktiviert und die beiden Hall-Sensoren geben ihre Hall-Signale getrennt auf zwei parallele analoge Hallsignal-Busleitungen.

Die Vorteile des erfindungsgemäßen Verfahrens sind bereits oben im Zusammenhang mit dem erfindungsgemäßen Sensor beschrieben worden.

Im Folgenden wird die Erfindung an Hand von Ausführungsbeispielen unter Bezugnahme auf die Zeichnung im Einzelnen erläutert. In der Zeichnung zeigen:
- Fig. 1: eine schematische Darstellung des erfindungsgemäßen Sensors an einem Zylinder zur Positionsmessung des Zylinderkolbens;
- Fig. 2 und 3: eine schematische Darstellung der Steuerelektronik und damit verbundener Hall-Sensoren;
- Fig. 4: ein schematisches Diagramm der Hallsignale zweier benachbarter Hall-Sensoren;
- Fig. 5: ein Diagramm der Hallsignale einer Reihe benachbarter Hall- Sensoren.

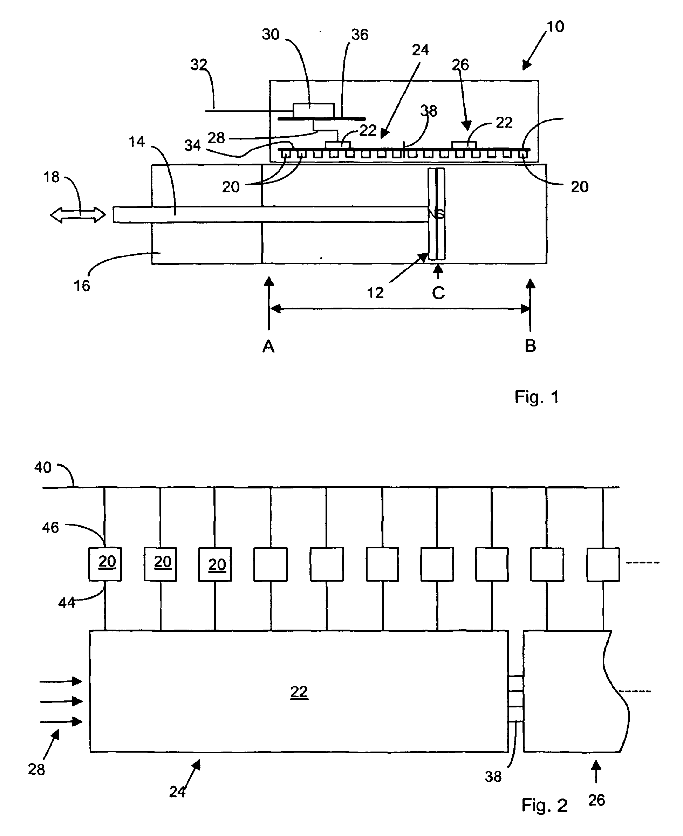

Ein in Fig. 1 dargestellter, erfindungsgemäßer, magnetischer Sensor 10 dient dazu, die Position C eines Gebermagneten 12 entlang einer Strecke AB zu bestimmen, wobei der Gebermagnet 12 auf einem Kolben 14 eines Arbeitszylinders 16 montiert ist. Derartige Arbeitszylinder werden beispielsweise in automatisiert arbeitenden Maschinen, wie Robotern und dergleichen, eingesetzt, um Kolbenpositionen zu erfassen, wenn sich der Kolben in Kolbenrichtung 18 bewegt.

Der Sensor 10 weist einzelne Sensorelemente auf, die als Hall-Sensoren 20 ausgebildet sind und entlang der Messstrecke angeordnet sind. Die Hall-Sensoren 20 sind mit einer Steuerelektronik 22 verbunden und mit dieser zusammen zu Modulen 24 bzw. 26 zusammengefasst. Das Modul 24 ist über eine Steckverbindung 28 mit einer bevorzugt als Mikrocontroller ausgebildeten Auswerteelektronik 30 verbunden. Über eine Leitung 32 werden dem erfindungsgemäßen Sensor 10 alle notwendigen Daten und Versorgungsspannungen zugeführt sowie Positionssignale, die in der Auswerteelektronik 30 bestimmt werden, ausgegeben.

Bevorzugt sind die Hall-Sensoren 20 und die Steuerelektronik 22 auf einer ersten Leiterplatte 34 angeordnet und die Steuerelektronik 30 auf einer zweiten Leiterplatte 36. Erste und zweite Leiterplatte 34 und 36 sind über die Steckverbindung 28 bevorzugt derart miteinander verbunden, dass die Leiterplatten parallel übereinander angeordnet sind. Die Module 24 und 26 sind über elektrische Verbindungen 38 miteinander verbunden. Mechanisch sind die Module 24 und 26 über ihre Leiterplatten verbunden, so dass die beiden Leiterplatten die oben bezeichnete erste Leiterplatte 34 bilden.

Im Folgenden wird der erfindungsgemäße Sensor 10 im Detail und insbesondere seine Funktionsweise beschrieben.

In Fig. 2 ist schematisch das Modul 24 dargestellt mit der Steuerelektronik 22 und daran angeschlossenen acht Hall-Sensoren 20. Die Steuerelektronik 22 ist als Schieberegister 22 ausgebildet, wobei das Schieberegister verschiedene Funktionseinheiten enthält, nämlich das eigentliche Schieberegister und ein Ausgangsregister mit asynchronem Reset. Die Steuerelektronik empfängt seriell über die Steckverbindung 28 die Ansteuerdaten, beispielsweise über einen seriellen Datenbus, z.B. SPI oder I²C.

In einer ersten Ausführungsform der Erfindung enthalten die Ansteuerdaten die Information, welcher der Hall-Sensoren 20 aktiviert werden soll. Ist diese Information vollständig von dem Schieberegister 22 empfangen, aktiviert das Ausgangsregister des Schieberegisters 22 parallel die Hall-Sensoren 20, was in diesem Ausführungsbeispiel bedeutet, dass nur der eine angesteuerte Hall-Sensor aktiv wird. Die Hall-Sensoren 20 sind in diesem Ausführungsbeispiel an eine analoge Hallsignal-Busleitung 40 mit ihren analogen Ausgängen 46 angebunden, so dass bei Aktivierung der Hall-Sensoren 20 das Hallsignal des aktivierten Hall-Sensors auf der Hallsignal-Busleitung 40 zur Verfügung steht und der Auswerteelektronik 30 zugeführt wird. Die nicht aktivierten Hall-Sensoren sind inaktiv und somit hochohmig.

Zur Aktivierung der Hall-Sensoren 20 können die Hall-Sensoren 20 jeweils einen Sleep-Eingang 44 aufweisen, über den das Aktivierungssignal des Schieberegisters 22 an den jeweiligen Hall-Sensor 20 übermittelt wird. Alternativ könnten die Hall-Sensoren jeweils einen digitalen Schalter aufweisen zur Ein- und Ausschaltung der Spannungsversorgung des jeweiligen Hall-Sensors.

Um die Position des Gebermagneten 12 zu erfassen, werden beim Einschalten des Sensors 10 sämtliche Hall-Sensoren 20 der Reihe nach "abgefragt", also der Reihe nach aktiviert und ihre jeweiligen Hallsignale ausgewertet. Ist danach die Position C des Gebermagneten 12 bekannt, kann in der darauf folgenden Zeit die Position des Gebermagneten 12 verfolgt werden und es müssen nicht mehr sämtliche Hall-Sensoren 20 durchgeschaltet werden. Wie im Einzelnen die Erfassung und Verfolgung der Position vorteilhaft erfolgt, ist an sich aus der DE 3742524 bekannt.

Zur Kaskadierung von Modulen, also wenn weitere Module 26 angeschlossen werden, sind die Module über die Verbindung 38 miteinander verbunden. Dabei sind die Schieberegister 22 benachbarter Module seriell miteinander verbunden. Daten wie Taktsignale und Aktivierungssignale für die jeweiligen Ausgangsregister werden ebenso über die Verbindung 38 übertragen.

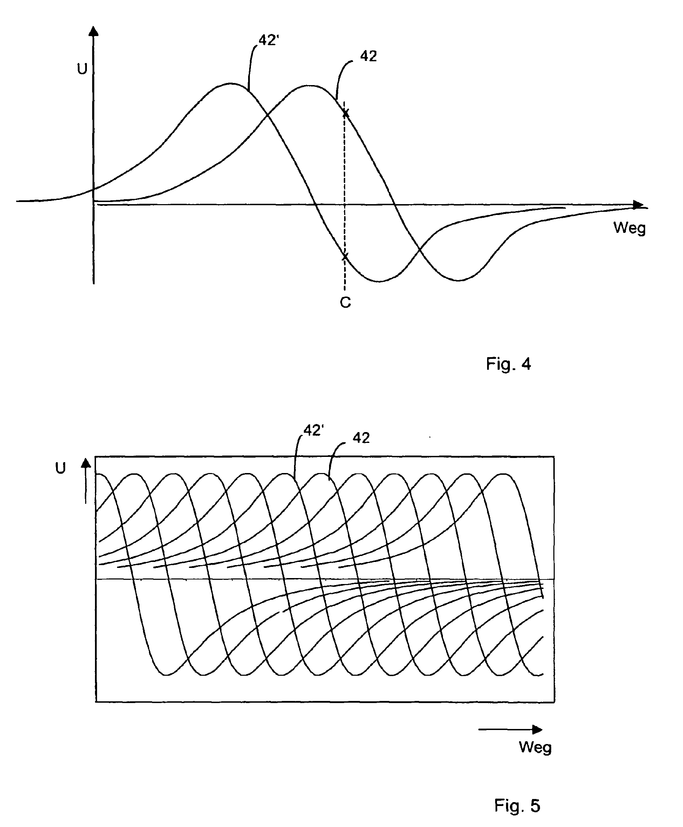

Typische Hallsignale, die von den Hall-Sensoren 20 in Abhängigkeit des Weges ausgegeben werden, sind in den Fig. 4 und 5 dargestellt. Jede dieser Kurven 42 entspricht dabei einem Hallsignal U eines bestimmten Hall-Sensors 20, wobei die dargestellten Signalverläufe jeweils in etwa einem Signalverlauf entsprechen, wenn die Hall-Sensoren 20 die radiale Komponente des Magnetfeldes des Gebermagneten 12 erfassen. In der Regel wird als Messbereich zur Positionsbestimmung lediglich der in etwa lineare Bereich zwischen den beiden Extrema einer Kurve 42 genutzt, weshalb die Kurven 42 derart beabstandet sind, dass wenn die gemessene Position das Ende eines solchen quasi linearen Bereichs erreicht, dann der quasi lineare Bereich des benachbarten Hall-Sensors beginnt und zur Positionsbestimmung dann der benachbarte Hall-Sensor aktiviert wird.

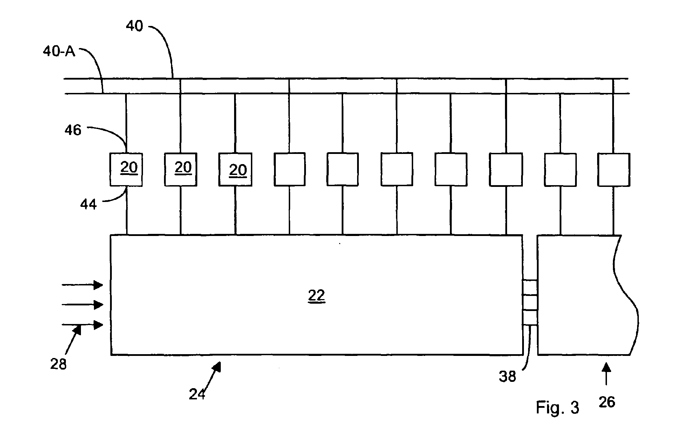

In einem zweiten, in Fig. 3 dargestellten Ausführungsbeispiel ist eine zweite analoge Hallsignal-Busleitung 40-A vorgesehen, an der jeder zweite der Hall-Sensoren 20 angebunden ist, so dass die Hall-Sensoren 20 immer abwechselnd an die erste und an die zweite Hallsignal-Busleitung 40 und 40-A angeschlossen sind. In dieser Ausführungsform sind jeweils zwei benachbarte Hall-Sensoren gleichzeitig aktivierbar, wobei dann immer der eine der beiden Hall-Sensoren sein Hallsignal 42 auf die eine Hallsignal-Busleitung gibt und der andere der beiden Hall-Sensoren sein Hallsignal auf die jeweils andere Hallsignal-Busleitung.

Auf diese Art erhält die Steuerelektronik 30 zwei Hallsignale 42, wie dies in Fig. 4 an der Position C schematisch dargestellt ist. Das hat einerseits den Vorteil, dass durch diese beiden Signale die Umschaltung von einem Hall-Sensor zum nächsten bei "Verfolgung" des Gebermagneten ohne Zeitverzögerung erfolgen kann und andererseits ein Hin- und Her-Schalten zwischen zwei Hall-Sensoren nicht auftreten kann, wenn der Gebermagnet 12 sich etwa mittig zwischen zwei Hall-Sensoren 20 befindet.

## Patentansprüche

1. Magnetischer Sensor (10) zur Bestimmung einer Position (C) eines Gebermagneten (12) entlang einer Strecke (AB) mit mehreren Sensorelementen (20), mit einer Steuerelektronik (22) zum Erhalt eines Sensorelementsignals (42) eines bestimmten der Sensorelemente (20), wobei die Sensorelemente (20) und die Steuerelektronik (22) zu einem Modul (24, 26) zusammengefasst sind und mit einer Signal-Leitung (40) zur Übermittlung des Sensorelementsignals (42) an eine Auswerteelektronik (30) zur Auswertung der Sensorelementsignale (42) und zur Ermittlung der Position (C),
**dadurch gekennzeichnet,**
- **dass** die Sensorelemente Hall-Sensoren (20) sind,
- **dass** die Steuerelektronik (22) ausgebildet ist, einerseits Ansteuerdaten für einen zu aktivierenden Hall-Sensor (20) seriell zu empfangen und andererseits die Hall-Sensoren (20) parallel an die Steuerelektronik (22) angeschlossen sind und entsprechend den Ansteuerdaten direkt aktivierbar sind
- und **dass** die Hall-Sensoren (20) unmittelbar an die als analoge Hallsignal-Busleitung (40, 40-A) ausgebildete Signal-Leitung angeschlossen sind.

2. Magnetischer Sensor nach einem der vorhergehenden Ansprüche, **dadurch gekennzeichnet, dass** die Steuerelektronik (22) als Schieberegister (22) ausgebildet ist.

3. Magnetischer Sensor nach einem der vorhergehenden Ansprüche, **dadurch gekennzeichnet, dass** mehrere Module (24, 26) kaskadierbar sind und die Ansteuerdaten von Modul zu Modul seriell durchgereicht werden.

4. Magnetischer Sensor nach einem der vorhergehenden Ansprüche, **dadurch gekennzeichnet, dass** die Hall-Sensoren (20) jeweils einen Sleep-Modus-Eingang (44) aufweisen oder die Hall-Sensoren jeweils einen digitalen Schalter aufweisen zur Ein- und Ausschaltung der Spannungversorgung.

5. Magnetischer Sensor nach einem der vorhergehenden Ansprüche, **dadurch gekennzeichnet, dass** eine zweite analoge Hallsignal-Busleitung (40-A) vorgesehen ist.

6. Magnetischer Sensor nach Anspruch 5, **dadurch gekennzeichnet, dass** die Hall-Sensoren (20) immer abwechselnd an die erste und zweite Hallsignal-Busleitung (40 und 40-A) angeschlossen sind und benachbarte Hall-Sensoren (20) gleichzeitig aktivierbar sind.

7. Magnetischer Sensor nach einem der vorhergehenden Ansprüche, **dadurch gekennzeichnet, dass** das oder die Module (24, 26) auf einer ersten Leiterplatte (34) und die Auswerteelektronik (30) auf einer zweiten Leiterplatte (36) angeordnet sind und die Leiterplatten (34 und 36) mit einer Steckverbindung (28) verbunden sind, wobei die Leiterplatten (34 und 36) bevorzugt parallel übereinander angeordnet sind.

8. Magnetischer Sensor nach einem der vorhergehenden Ansprüche, **dadurch gekennzeichnet, dass** die Hall-Sensoren (20) eine radiale Komponente des Magnetfelds des Gebermagneten (12) erfassen.

9. Magnetischer Sensor nach einem der vorhergehenden Ansprüche, **dadurch gekennzeichnet, dass** dieser zur Erfassung der Position eines einen vorzugsweise als Dauermagnet ausgebildeten Gebermagnet (12) tragenden Kolbens (14) eines Pneumatikzylinders (16) ausgebildet ist.

10. Verfahren zur Bestimmung einer Position (C) eines Gebermagneten (12) entlang einer Strecke (AB), bei dem Sensorelemente (20) längs der Strecke angeordnet werden und ein Sensorelementsignal (42) eines bestimmten der Sensorelemente mittels einer Steuerelektronik (22) erhalten wird und die Sensorelementsignale (42) zur Ermittlung der Position über eine Signal-Leitung (40) an eine Auswerteelektronik (30) gegeben werden und aus den Sensorelementsignalen (42) die Position bestimmt wird, **dadurch gekennzeichnet,**
- **dass** die Steuerelektronik (22) einerseits die Ansteuerdaten für ein zu aktivierendes und als Hall-Sensor (20) ausgebildetes Sensorelement seriell empfängt und andererseits die Hall-Sensoren (20) parallel und entsprechend der Ansteuerdaten direkt aktiviert
- und **dass** das Hallsignal (42) oder die Hallsignale (42, 42') unmittelbar auf die als analoge Hallsignal-Busleitung (40, 40-A) ausgebildete Signal-Leitung gegeben wird oder werden.

11. Verfahren nach Anspruch 10, **dadurch gekennzeichnet, dass** die Hall-Sensoren (20) über wenigstens ein Schieberegister (22) aktiviert werden.

12. Verfahren nach einem der vorhergehenden Ansprüche 10 bis 11, **dadurch gekennzeichnet, dass** jeweils benachbarte Hall-Sensoren (20) gleichzeitig aktiviert werden und die beiden Hall-Sensoren (20) ihre Hall-Signale (42, 42') getrennt auf zwei parallele analoge Hallsignal-Busleitungen (40, 40-A) geben.

## Claims

1. A magnetic sensor (10) for determining a position (C) of an encoder magnet (12) along a path (AB) with a plurality of sensor elements, having control electronics (22) for obtaining a sensor element signal (42) of a specific one of the sensor elements (20), wherein the sensor elements (20) and the control electronics (22) are combined to form a module (24, 26), and having a signal line (40) for transmitting the sensor element signal (42) to evaluation electronics (30) for evaluating the sensor elements signals (42) and for determining the position (C),
**characterised in that**
- the sensor elements are Hall sensors (20);
- the control electronics (22) are made to serially receive control data for a Hall sensor (20) to be activated, on the one hand, and, on the other hand, the Hall sensors (20) are connected to the control electronics (22) in parallel and can be activated directly in accordance with the control data;
- and the Hall Sensors (20) are connected directly to the signal line made as an analogue Hall signal bus line (40, 40-A).

2. A magnetic sensor in accordance with claim 1, **characterised in that** the control electronics (22) are made as shift registers (22).

3. A magnetic sensor in accordance with any one of the preceding claims, **characterised in that** a plurality of modules (24, 26) can be cascaded and the control data are passed through serially from module to module.

4. A magnetic sensor in accordance with any one of the preceding claims, **characterised in that** the Hall sensors (20) each have a sleep mode input (44) or the Hall sensors each have a digital switch for switching the voltage supply on and off.

5. A magnetic sensor in accordance with any one of the preceding claims, **characterised in that** a second analogue Hall signal bus line (40-A) is provided.

6. A magnetic sensor in accordance with claim 5, **characterised in that** the Hall sensors (20) are always connoted alternately to the first and second Hall signal bus lines (40 and 40-A) and adjacent Hall sensors (20) can be activated simultaneously.

7. A magnetic sensor in accordance with any one of the preceding claims, **characterised in that** the module or modules (24, 26) are arranged on a first circuit board (34) and the evaluation electronics (30) are arranged on a second circuit board (36) and the circuit boards (34 and 36) are connected by a plug-in connection (28), with the circuit boards (34 and 36) preferably being arranged in parallel over one another.

8. A magnetic sensor in accordance with any one of the preceding claims, **characterised in that** the Hall sensors (20) detect a radial component of the magnetic field of the encoder magnet (12).

9. A magnetic sensor in accordance with any one of the preceding claims, **characterised in that** it is made for detecting the position of a piston (14) of a pneumatic cylinder (16) carrying an encoder magnet (12) preferably made as a permanent magnet.

10. A method for determining a position (C) of an encoder magnet (12) along a path (AB), wherein sensor elements (20) are arranged along the path and a sensor element signal (42) of a specific one of the sensor elements is obtained by means of control electronics (22) and the sensor element signals (42) are forwarded via a signal line (40) to evaluation electronics (30) to determine the position and the position is determined from the sensor element signals (42), **characterised in that**
- the control electronics (22) serially receive the control data for a sensor element to be activated and made as a Hall sensor (20), on the one hand, and, on the other hand, the Hall sensors (20) are activated directly in parallel and in accordance with the control data;
and **in that** the Hall signal (42) or the Hall signals (42, 42') is or are forwarded directly to the signal line made as an analogue Hall signal bus line (40, 40A).

11. A method in accordance with claim 10, **characterised in that** the Hall sensors (20) are activated via at least one shift register (22).

12. A method in accordance with claim 10 or 11, **characterised in that** respective adjacent Hall sensors (20) are activated simultaneously and the two Hall sensors (20) forward their Hall signals (42, 42') separately to two parallel, analogue Hall signal bus lines (40, 40-A).

## Revendications

1. Capteur magnétique (10) pour déterminer une position (C) d'un aimant émetteur (12) le long d'un trajet (AB) avec plusieurs éléments capteurs (20), avec une unité électronique de commande (22) pour obtenir un signal d'élément capteur (42) d'un élément déterminé parmi les éléments capteurs (20), dans lequel les éléments capteurs (20) et l'unité électronique de commande (22) sont regroupés et en un module (24, 26), et avec une ligne à signaux (40) pour fournir le signal d'élément capteur (42) à une unité électronique d'évaluation (30) pour évaluer les signaux d'éléments capteurs (42) et pour déterminer la position (C),
**caractérisé en ce que**
- les éléments capteurs sont des capteurs à effet Hall (20),
- l'unité électronique de commande (22) est réalisée d'une part pour recevoir en série des données de pilotage pour un capteur à effet Hall (20) à activer et d'autre part pour que les capteurs à effet Hall (20) soient branchés en parallèle à l'unité électronique de commande (22) et susceptibles d'être activés en correspondance des données de pilotage,
et
- les capteurs à effet Hall (20) sont branchés directement à la ligne à signaux réalisée sous forme de ligne de bus analogique (40, 40-A) pour signaux de Hall.

2. Capteur magnétique selon la revendication 1, **caractérisé en ce que** l'unité électronique de commande (22) est réalisée comme registre à décalage (22).

3. Capteur magnétique selon l'une des revendications précédentes, **caractérisé en ce que** plusieurs modules (24, 26) peuvent être montés en cascade et les données de pilotage sont passées en mode série de module à module.

4. Capteur magnétique selon l'une des revendications précédentes, **caractérisé en ce que** les capteurs à effet Hall (20) comprennent chacun une entrée de mode de veille (44), ou bien les capteurs à effet Hall comprennent chacun un commutateur numérique pour la mise en marche/arrêt de l'alimentation électrique.

5. Capteur magnétique selon l'une des revendications précédentes, **caractérisé en ce qu'**il est prévu une seconde ligne de bus analogique pour signaux de Hall (40-A).

6. Capteur magnétique selon la revendication 5, **caractérisé en ce que** les capteurs à effet Hall (20) sont toujours branchés alternativement à la première et à la seconde ligne de bus pour signaux de Hall (40 et 40-A) et des capteurs à effet Hall voisins (20) peuvent être activés simultanément.

7. Capteur magnétique selon l'une des revendications précédentes, **caractérisé en ce que** le ou les modules (24, 26) sont agencés sur une première carte à circuits (34) et l'unité électronique d'évaluation (30) est agencée sur une seconde carte à circuits (36), et les cartes à circuits (34 et 36) sont connectées avec une connexion à enfichage (28), telle que les cartes à circuits (34 et 36) sont agencées de préférence parallèlement l'une au-dessus de l'autre.

8. Capteur magnétique selon l'une des revendications précédentes, **caractérisé en ce que** les capteurs à effet Hall (20) détectent une composante radiale du champ magnétique de l'aimant émetteur (12).

9. Capteur magnétique selon l'une des revendications précédentes, **caractérisé en ce que** celui-ci est réalisé pour la détection de la position d'un piston (14), d'un vérin pneumatique (16), qui porte un aimant émetteur (12) réalisé de préférence comme un aimant permanent.

10. Procédé pour la détermination d'une position (C) d'un aimant émetteur (12) le long d'un trajet (AB), dans lequel des éléments capteurs (20) sont agencés le long du trajet et on obtient un signal d'élément capteur (42) provenant d'un élément déterminé parmi les éléments capteurs au moyen d'une unité électronique de commande (22) et les signaux d'éléments capteurs sont fournis à une unité électronique d'évaluation (30) pour la détermination de la position via une ligne à signaux (40), et on détermine la position à partir des signaux d'éléments capteurs (42), **caractérisé en ce que**
- l'unité électronique de commande (22) reçoit en série les données de pilotage pour un élément capteur à activer et réalisé sous forme de capteur à effet Hall (20) et active d'autre part les capteurs à effet Hall (20) en parallèle et directement en correspondance des données de pilotage,
- et **en ce que** le signal de Hall (42) ou les signaux de Hall (42, 42') est/sont donnés directement à la ligne à signaux réalisée sous forme de ligne de bus analogique (40, 40-A) pour signaux de Hall.

11. Procédé selon la revendication 10, **caractérisé en ce que** les capteurs à effet Hall (20) sont activés via au moins un registre à décalage (22).

12. Procédé selon la revendication 10 ou 11, **caractérisé en ce que** des capteurs à effet Hall (20) respectivement voisins sont activés simultanément, et les deux capteurs à effet Hall (20) fournissent leurs signaux de Hall (42, 42') séparément vers deux lignes de bus analogiques parallèles (40, 40-A) pour signaux de Hall.
